Europäisches Patentamt

European Patent Office

Office européen des brevets

(19)

(11) Veröffentlichungsnummer : **0 397 757 B1**

(12) **EUROPÄISCHE PATENTSCHRIFT**

(45) Veröffentlichungstag der Patentschrift :
21.11.91 Patentblatt 91/47

(51) Int. Cl.⁵ : **G01V 9/04**

(21) Anmeldenummer : **89902035.8**

(22) Anmeldetag : **02.02.89**

(86) Internationale Anmeldenummer :
**PCT/EP89/00103**

(87) Internationale Veröffentlichungsnummer :
**WO 89/07276 10.08.89 Gazette 89/18**

(54) **LICHTSCHRANKENGITTER.**

(30) Priorität : **02.02.88 DE 3803033**

(43) Veröffentlichungstag der Anmeldung :
**22.11.90 Patentblatt 90/47**

(45) Bekanntmachung des Hinweises auf die
Patenterteilung :
**21.11.91 Patentblatt 91/47**

(84) Benannte Vertragsstaaten :
**CH DE FR GB IT LI SE**

(56) Entgegenhaltungen :
**FR-A- 2 603 386**
**GB-A- 2 023 282**
**US-A- 4 266 124**

(73) Patentinhaber : **Erwin Sick GmbH**
**Optik-Elektronik**
**Sebastian-Kneipp-Strasse 1**
**W-7808 Waldkirch (DE)**

(72) Erfinder : **CLEMENS, Klaus**
**Maximilianstr. 28**
**W-7800 Freiburg (DE)**

(74) Vertreter : **Morgan, James G.**
**Manitz, Finsterwald, Rotermund, Heyn &**
**Morgan Robert-Koch-Strasse 1**
**W-8000 München 22 (DE)**

## Beschreibung

Die Erfindung betrifft ein Lichtschrankengitter mit mehreren nebeneinander angeordneten Lichtquellen und jeweils einer Lichtquelle zugeordneten Lichtempfängern, einer Lichtquellensteuerung sowie einer Empfängersteuerung, wobei die Lichtquellen und Lichtempfänger zur Abgabe bzw. zum Empfang von Lichtimpulsen jeweils einzeln und zeitlich nacheinander ansteuerbar sind, die Lichtquellensteuerung und die von dieser elektrisch entkoppelte Empfängersteuerung synchron betreibbar sind, wenigstens einer der Lichtempfänger in Abhängigkeit vom Empfang eines vorangehenden Lichtimpulses ansteuerbar ist und die Empfängersteuerung nach Ausbleiben eines erwarteten Lichtimpulses bzw. nach der Ansteuerung eines letzten Lichtempfängers auf einen ersten Lichtempfänger zurücksetzbar ist.

Die Lichtquellen derartiger Lichtschrankengitter senden in zeitlicher Abfolge Lichtbündel aus, welche zusammen einen vorbestimmten Raumbereich bzw. eine vorbestimmte Fläche erfassen. Die Lichtquellen werden einzeln und gemäß einer vorgegeben zeitlichen Abfolge angesteuert. In entsprechender Reihenfolge und im gleichen Rythmus müssen auch die Lichtempfänger aktiviert, d.h. insbesondere an eine Auswerteelektronik angelegt werden.

Damit ist bei einer jeweils angesteuerten Lichtquelle jeweils nur ein, in der Regel der dieser Lichtquelle fest zugeordnete Lichtempfänger aktiviert.

Die erforderliche Synchronisation zwischen Sende- und Empfangsseite wurde bisher teilweise über besondere Verbindungsleitungen zwischen der Lichtquellensteuerung und der Empfängersteuerung hergestellt, was insbesondere bei auf gegenüberliegenden Seiten des zu überwachenden Bereichs angeordneten Lichtquellen und Lichtempfängern von Nachteil ist.

Aus der US-A-4 266 124 ist ein Lichtschrankengitter der eingangs genannten Art bekannt, bei der eine solche Synchronisation zwischen Sender und Empfänger ohne irgendwelche elektrischen Zwischenverbindungen gegeben ist. Hierbei werden im Empfänger die verschiedenen Empfangskanäle nacheinander mittels eines besonderen Taktgenerators aktiviert. Bei auf den ersten Lichtempfänger zurückgesetzter Empfängersteuerung wird die die Weiterschaltung der Empfänger bewirkende Takterzeugung solange ausgesetzt, bis zwei unmittelbar aufeinanderfolgende, ein erstes Lichtsignal repräsentierende Lichtimpulse empfangen werden. Die Ansteuerung der weiteren Lichtempfänger erfolgt dann entsprechend der vorgegebenen Frequenz des Taktgenerators des Empfängers. Dieser Taktgenerator muß hinsichtlich seiner Frequenz exakt auf die Frequenz des senderseitig vorgesehenen Taktgenerators abgestimmt sein, wobei zusätzlich noch zu berücksichtigen ist, daß die weiteren Lichtsignale anders als das erste Lichtsignal jeweils nur noch einen Lichtimpuls umfassen.

Dieses Lichtschrankengitter ist somit vom Aufbau her relativ aufwendig, was insbesondere daraus folgt, daß zusätzlich der Empfänger mit einem Taktgenerator auszustatten ist, dessen Frequenz zudem auf die des senderseitigen Generators genau abgestimmt sein muß.

Der Erfindung liegt die Aufgabe zugrunde, ein Lichtschrankengitter der eingangs genannten Art zu schaffen, bei dem der weiterhin ohne irgendwelche Verbindungsleitungen zwischen der Lichtquellen- und Lichtempfängereinheit aufrechterhaltene Synchronbetrieb auch bei einfachstem Aufbau und insbesondere ohne eine spezielle, fest auf eine vorgegebene Frequenz eines senderseitigen Taktgenerators abzustimmende empfängerseitige Takterzeugung zuverlässig gewährleistet ist.

Die Aufgabe wird nach der Erfindung dadurch gelöst, daß mittels der Empfängersteuerung zur zeitlich aufeinanderfolgenden Aktivierung der Lichtempfänger jeder dieser Lichtempfänger jeweils in Abhängigkeit vom Zeitpunkt des Auftretens des zuvor empfangenen Lichtimpulses ansteuerbar ist, daß durch die Lichtquellensteuerung jeweils zwischen der Ansteuerung einer letzten und einer ersten Lichtquelle eine Synchronisierpause vorgebbar ist und daß die Empfängersteuerung in Abhängigkeit vom Auftreten der Synchronisierpause auf den ersten Lichtempfänger zurücksetzbar ist.

Aufgrund dieser Ausbildung können ohne nennenswerten elektronischen Aufwand weiterhin besondere Verbindungsleitungen zwischen den Sende- und Empfangseinheiten entfallen, was insbesondere dann von entscheidendem Vorteil ist, wenn die Lichtquellen und die Lichtempfänger auf gegenüberliegenden Seiten des zu überwachenden Bereichs angeordnet sind. Da die Synchronisierung der Empfangseinheit stets unmittelbar ausgehend von den empfangenen Lichtimpulsen erfolgt und ein besonderer, auf eine feste Sendefrequenz abgestimmter empfangsseitiger Taktgenerator nicht erforderlich ist, ist das erfindungsgemäße Lichtschrankengitter praktisch auch justierfrei. Es eignet sich zur Überwachung von Flächen und Raumbereichen unterschiedlichster Abmessungen und zeichnet sich unter anderem auch durch seine Unempfindlichkeit gegenüber Erschütterungen sowie einen geringen Stromverbrauch aus.

Die Umschaltung von einem Lichtempfänger auf den nächsten kann beispielsweise stets dann erfolgen, wenn der erwartete Lichtimpuls rechtzeitig empfangen worden ist. Die Reihenfolge der Empfängeransteuerung kann dabei in Übereinstimmung mit der Lichtquellenansteuerung fest vorgegeben sein. Die Aktivierung der Lichtempfänger erfolgt beispielsweise zyklusweise, d.h. daß nach einer Aktivierung des in der Ansteuerungs-Abfolge letzten Lichtempfängers wiederum der erste Lichtempfänger der Folge aktiviert wird.

Die Empfängersteuerung umfaßt gemäß einer besonders vorteilhaften Ausführungsvariante Mittel zur Erfassung und Meldung des Ausbleibens eines während einer jeweiligen Empfängeransteuerung erwarteten Lichtimpulses, wobei die Empfängersteuerung bei Ausbleiben des erwarteten Lichtimpulses in einen Ausgangszustand rücksetzbar ist, in dem ein definierter erster Lichtempfänger angesteuert ist.

Ist demnach zumindest ein Lichtweg zwischen einer Lichtquelle und einem Lichtempfänger durch ein Hindernis gestört, so führt dies unmittelbar zur Abgabe eines Meldesignals, welches den Eingriff in den zu überwachenden Bereich bzw. die zu überwachende Fläche signalisiert. Dadurch, daß die Empfängersteuerung bei Ausbleiben eines jeweiligen erwarteten Lichtimpulses gleichzeitig in einen definierten Ausgangszustand zurückgesetzt wird, ist die Neusynchronisierung des Lichtschrankengitters nach dem erfolgten Eingriff wesentlich erleichtert. Darüberhinaus ist es bei entsprechender Wahl der Pausen zwischen den ausgesandten Lichtimpulsen möglich, mit der Zurückschaltung auf einen definierten ersten Lichtempfänger auch die gewünschte feste Zuordnung bestimmter Lichtempfänger zu den jeweiligen Lichtquellen herzustellen.

Dazu ist gemäß einer besonders vorteilhaften Weiterbildung der Erfindung vorgesehen, daß die durch die Lichtquellensteuerung vorgebbare Synchronisierpause zwischen der Ansteuerung einer letzten und einer ersten Lichtquelle größer als ein zumindest dem zweiten bis letzten Lichtempfänger während einer Ansteuerung jeweils zugeordnetes Zeitfenster ist, während dem ein Lichtimpuls erwartet wird.

Demnach wirkt sich das Auftreten der Synchronisierpause zunächst in gleicher Weise auf die Empfängersteuerung aus wie ein Eingriff in den zu überwachenden Bereich durch ein Hindernis. D.h., die Empfängersteuerung wird bei Auftreten der Synchronisierpause in den Ausgangszustand zurückgesetzt, in dem der erste Lichtempfänger eines Aktivierungszyklus angesteuert ist. Nachdem anschließend an die Synchronisierpause wiederum die erste Lichtquelle des Sendezyklus angesteuert wird, ist sichergestellt, daß der von dieser ersten Lichtquelle abgesandte Lichtimpuls vom dieser ersten Lichtquelle zugeordneten Lichtempfänger empfangen wird. Die jeweilige Zuordnung der weiteren Lichtquellen und Lichtempfänger ist durch die vorgebbare weitere Abfolge der Senderansteuerung bzw. Empfängeraktivierung gewährleistet.

Die Empfängersteuerung erkennt demnach aufgrund der im Vergleich zu den restlichen Sendepausen größeren Synchronisierpause einen Sprung von der letzten Lichtquelle zur ersten Lichtquelle und damit den Beginn eines neuen Zyklus. Dieser Unterschied der Pausen zwischen den Sendeimpulsen wird erfindungsgemäß für die Synchronisation zwischen der Sende- und Empfangsseite ausgenutzt.

Bei Einschalten des Geräts kann es passieren, daß beim ersten Hoch- bzw. Herunterlaufen eine mangelnde Synchronisierung vorliegt, d.h. daß insbesondere einander nicht zugeordnete Sender und Empfänger gleichzeitig angesteuert sind. Dies erfolgt jedoch nur während des ersten Hochlaufens bzw. Herunterlaufens. Bereits beim zweiten Durchlaufen der Lichtquellen und Lichtempfänger ist die gewüschte Zuordnung wieder gegeben.

Es muß sichergestellt sein, daß bei ungestörtem zu überwachenden Bereich trotz der längeren Synchronisierpause mit dem Empfang des von der ersten Lichtquelle stammenden Lichtimpulses ein Weiterschalten auf den nächsten Lichtempfänger erfolgt. Dazu ist zweckmäßigerweise vorgesehen, daß die Empfängersteuerung eine Austasterkennung zur Erfassung eines vollständigen Durchlaufs vom ersten bis zum letzten Lichtempfänger umfaßt und daß das dem anschließend ansteuerbaren ersten Lichtempfänger zugeordnete Zeitfenster, während dem der betreffende Lichtimpuls erwartet wird, an die Synchronisierpause angepaßt ist, d.h. in Abhängigkeit von der Synchronisierpause größer gewählt ist.

Bei einem fest vorgegebenen Durchlauf vom ersten bis zum letzten Lichtempfänger genügt eine Überwachung der Ansteuerung des letzten Lichtempfängers, da in diesem Falle eine solche Ansteuerung nur dann auftreten kann, wenn zuvor sämtliche vorangehenden Lichtempfänger des betreffenden Zyklus aktiviert worden sind.

Vorteilhafterweise umfassen die Mittel zur Erfassung und Meldung des Ausbleibens eines erwarteten Lichtimpulses eine mit der Erfassung des Ausbleibens des betreffenden Lichtimpulses verriegelbare Freigabelogik, welche zweckmäßigerweise in Abhängigkeit von der Erfassung eines vollständigen Durchlaufs vom ersten bis zum letzten Lichtempfänger rücksetzbar ist. Auch hierbei genügt im Falle einer vorbestimmten Abfolge der Ansteuerung der Lichtempfänger vom ersten bis zum letzten Empfänger eine Überwachung der Ansteuerung des letzten Lichtempfängers, da dieser nur bei einem vorangehenden vollständigen Zyklus angesteuert wird.

Eine Verriegelung der Freigabelogik hat zur Folge, daß der Geräteausgang inaktiv wird. Eine erneute Aktivierung des Geräteausgangs ist nur bei einem vollständigen Durchlaufen von Sendern und Empfängern bei ungestörtem zu überwachenden Bereich möglich.

Die Synchronisation erfolgt hierbei in zwei Schritten, wenn mehrere Sendeelemente in das Empfangselement einstrahlen können.

Tritt ein Hindernis in den zu überwachenden Bereich bzw. die zu überwachende Fläche ein, so wird die Empfängersteuerung infolge des Ausbleibens eines erwarteten Lichtimpulses in den Ausgangszustand zurückgesetzt, in dem beispielsweise der erste Lichtempfänger angesteuert ist. Können mehrere Lichtquellen in den ersten Lichtempfänger einstrahlen, so erfolgt die Synchronisation in zwei Schritten. Im ersten Schritt rastet der Empfänger auf den Sender ein, sobald ein Lichtimpuls vom ersten Lichtempfänger erfaßt wird, während das diesem Empfangselement zugeordnete Zeitfenster geöffnet ist. Hierbei kann die Eingriffserkennung zurückgesetzt werden. Stammt der vom ersten Lichtempfänger erfaßte Lichtimpuls nicht von der zugeordneten ersten Lichtquelle, so werden die Empfangs- und Sendeelemente zunächst versetzt getaktet. Hierbei trifft die Aktivierung eines der folgenden Lichtempfänger auf die längere Synchronisierpause. Dies hat zur Folge, daß die Lichtempfängersteuerung auf den ersten Lichtempfänger zurückschaltet. Dieser erste Lichtempfänger wird so rechtzeitig aktiviert, daß er bei weiterhin ungestörtem zu überwachenden Bereich den anschließend von der ersten Lichtquelle ausgesandten Lichtimpuls empfängt. Das anschließende Hochlaufen von Lichtquellen und Lichtempfänger erfolgt demnach in voller Synchronisation.

Den Lichtquellen und/oder Lichtempfängern können gemäß einer praktischen Ausgestaltung des erfindungsgemäßen Lichtschrankengitters Sender- bzw. Empfängermodule zugeordnet sein, die zu einem von der jeweiligen Steuerung ansteuerbaren Schieberegister verschaltet sind. Das jeweilige Schieberegister kann eine Art Umlaufregister sein, wobei jedoch die Ansteuerung stets so erfolgen muß, daß auf der Empfangs- bzw. Sendeseite jeweils stets nur ein Modul angesteuert wird.

Vorteilhafte Anwendungsmöglichkeiten des erfindungsgemäßen Lichtschrankengitters liegen insbesondere in seiner Ausbildung als Melder im Bereich der Tür-, Raum- und Rolltreppenüberwachung, wobei es insbesondere der Flächenüberwachung dient. Bevorzugt wird es als Durchgangsüberwachung insbesondere zur Türsteuerung in Fahrstühlen verwendet.

Weitere besonders vorteilhafte Weiterbildungen der Erfindung sind in den abhängigen Ansprüchen angegeben.

Als Lichtempfänger eignen sich insbesondere im infraroten Bereich lichtemittierende Dioden, die sich durch eine gute Quantenausbeute und eine hohe Lebensdauer auszeichnen. Die Lichtempfänger können auf die Emissionswellenlänge der Lichtquellen abgestimmt sein.

Die Sende- bzw. Empfangselemente können einschließlich der jeweils zugeordneten Steuerungen in Sender- bzw. Empfängerleisten untergebracht sein. Vor den Sende- bzw. Empfangselementen sind zweckmäßigerweise Linsen zur Focussierung der Lichtbündel und Filterscheiben zur Erschwerung der Einsicht von außen in den Aufbau der Anlage untergebracht. Die Abstände der Lichtquellen bzw. Lichtempfänger untereinander sowie die Anzahl dieser Elemente kann variiert und so den jeweiligen Erfordernissen angepaßt werden.

Die Erfindung wird im folgenden anhand eines Ausführungsbeispiels unter Bezugnahme auf die Zeichnung näher erläutert; in dieser zeigt:

Fig. 1 ein Ausführungsbeispiel eines zur Flächenüberwachung dienenden Lichtschrankengitters mit einer Sender- und einer Empfängerleiste,

Fig. 2 den zeitlichen Verlauf der Ansteuerimpulse der Lichtquellen für eine Senderleiste mit sieben Lichtquellen,

Fig. 3 ein Ausführungsbeispiel einer Empfängerleiste,

Fig. 4 den zeitlichen Verlauf der Aktivierung der den Lichtempfängern zugordneten Empfängermodule,

Fig. 5 den zeitlichen Verlauf der Spannungen an verschiedenen Punkten der der Empfängerleiste gemäß Fig. 3 zugeordneten Schaltung im synchronisierten Zustand,

Fig. 6 den zeitlichen Verlauf der Spannungen an verschiedenen Punkten der der Empfängerleiste gemäß Fig. 3 zugeordneten Schaltung bei einem Eingriff in den Lichtweg, und

Fig. 7 den zeitlichen Verlauf der Spannungen an verschiedenen Punkten der der Empfängerleiste gemäß Fig. 3 zugeordneten Schaltung unmittelbar nach einer Freigabe des Lichtweges.

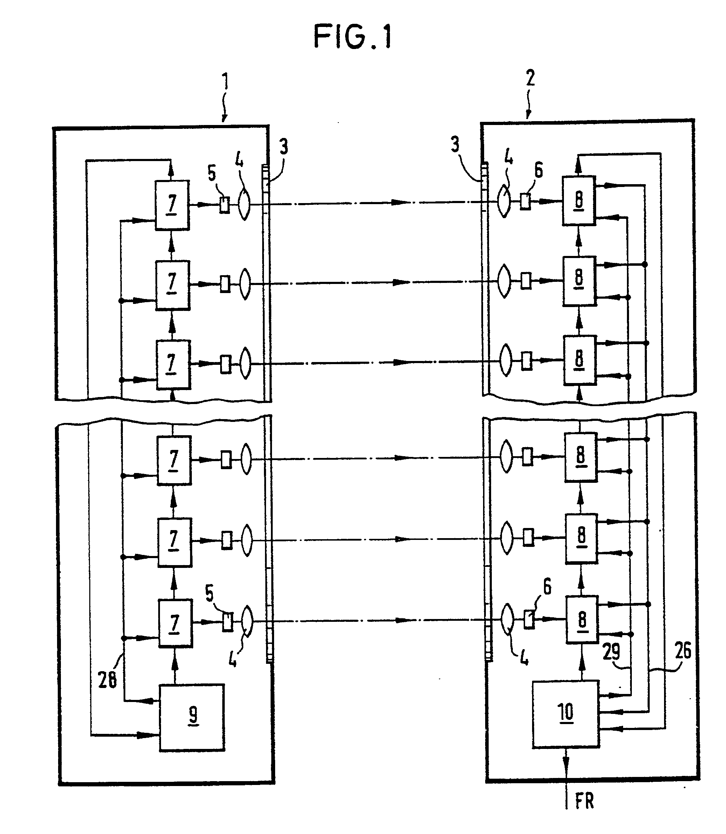

In Fig. 1 ist ein Lichtschrankengitter mit einer Senderleiste 1 und einer Empfängerleiste 2 gezeigt.

Die Senderleiste 1 umfaßt sieben Sendermodule 7, denen jeweils eine Lichtquelle 5 zugeordnet ist.

Die Senderleiste 1 umfaßt ferner eine Lichtquellensteuerung 9 zur Ansteuerung der nach Art eines Schieberegisters verschalteten Sendermodule 7.

Die das Schieberegister bildenden Sendermodule 7 werden von der Lichtquellensteuerung 9 gesetzt und getaktet. Der Ausgang des oberen, letzten Sendermoduls 7 ist zu einem Eingang der Lichtquellensteuerung 9 zurückgeführt, um eine Art

Umlauf-Schieberegister zu bilden. Der Setzeingang des ersten, unteren Sendermoduls 7 ist von der Lichtquellensteuerung 9 beaufschlagbar. Die Takteingänge der Sendermodule 7 sind mit einer gemeinsamen, von der Lichtquellensteuerung ausgehenden Taktleitung 28 verbunden.

Die Empfängerleiste 2 umfaßt sieben Lichtempfänger 6, denen jeweils ein Empfängermodul 8 nachgeschaltet ist. Die Empfängermodule 8 sind wiederum nach Art eines Schieberegisters verschaltet.

Das durch die Empfängermodule 8 gebildete Schieberegister wird von einer Empfängersteuerung 10 getaktet und gesetzt. Der Ausgang des letzten, oberen Empfängermoduls 8 ist wiederum zur Bildung eines Umlauf-Schieberegisters zur Empfängersteuerung 10 zurückgeführt. Der Setzeingang des ersten, unteren Empfängermoduls 8 ist von der Empfängersteuerung 10 beaufschlagbar. Die Takteingänge der Empfängermodule 8 sind mit einer gemeinsamen, von der Empfängersteuerung 10 ausgehenden Taktleitung 29 verbunden.

Die Ausgänge der Empfängermodule 8 sind mit einer gemeinsamen, zur Empfängersteuerung 10 führenden Zeitmultiplexleitung 26 verbunden.

Durch die in Fig. 1 angedeuteten, zwischen der Senderleiste 1 und der Empfängerleiste 2 verlaufenden Lichtbündel ist auch die Zuordnung der jeweiligen Lichtempfänger 6 zu den betreffenden Lichtquellen 5 angegeben. So ist beispielsweise der untere, erste Lichtempfänger 6 der unteren, ersten Lichtquelle 5 zuzuordnen.

Den Lichtquellen 5 sowie den Lichtempfängern 6 sind jeweils Linsen 4 zur Focussierung der Lichtbündel zugeordnet.

Vor den Lichtempfängern 6 und den Lichtquellen 5 bzw. den diesen zugeordneten Linsen 4 sind Filterscheiben 3 angeordnet, um eine Einsicht von außen zu erschweren.

Die Ansteuerung der jeweils zu einem Schieberegister verschalteten Sendermodule 7 und Empfängermodule 8 durch die Lichtquellensteuerung 9 bzw. Empfängersteuerung 10 erfolgt jeweils derart, daß stets nur ein Sendermodul 7 bzw. ein Empfängermodul 8 aktiviert ist.

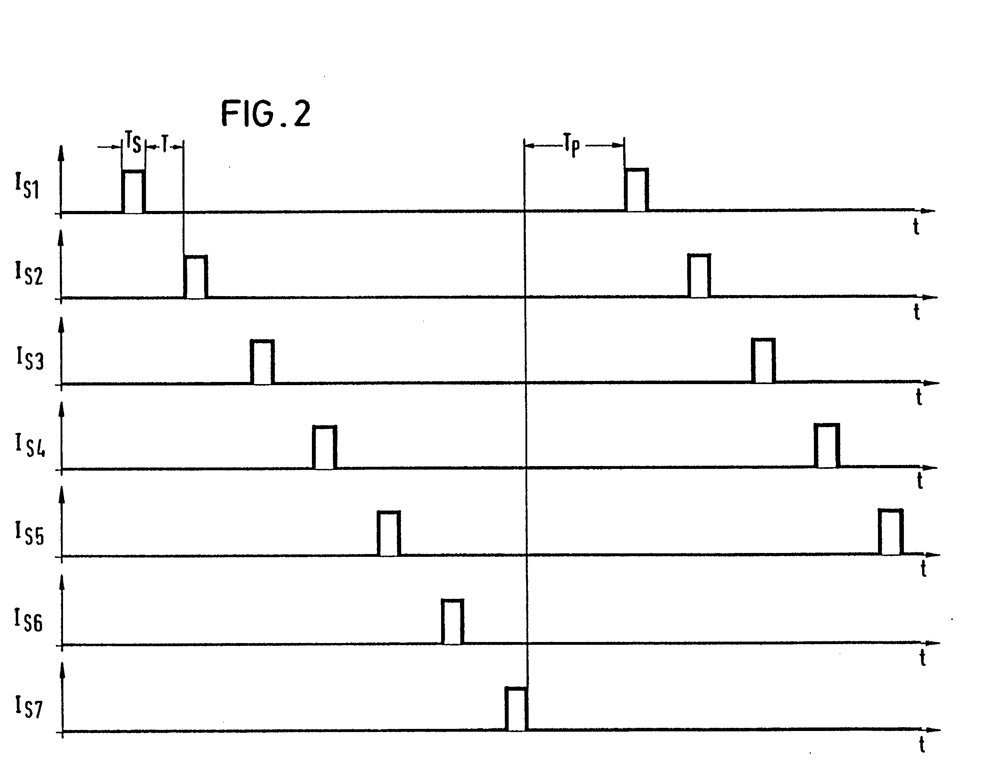

In Fig. 2 ist der zeitliche Verlauf der Ansteuerimpulse für die sieben Sendermodule 7 der Senderleiste 1 gezeigt. Hierbei sind die den sieben Sendermodulen 7 zugeordneten Sendeimpulse $I_{S1}$ bis $I_{S7}$ jeweils über der Zeitachse t aufgetragen.

Die Dauer eines jeweilgen Sendeimpulses $I_{Si}$ beträgt $T_S$, während zwischen zwei Sendeimpulsen eines Zyklus die Zeitdauer T und zwischen dem letzten Sendeimpuls $I_{S7}$ eines Zyklus und dem ersten Sendeimpuls $I_{S1}$ des nächsten Zyklus die Synchronisierpause $T_p$ liegt.

Die Synchronisierpause $T_p$ ist gleich groß wie die Dauer $T_S$ eines Sendeimpulses plus zwei mal T zusammengenommen.

Die Lichtquellensteuerung 9 ist derart ausgelegt, daß zu keinem Zeitpunkt mehrere Lichtquellen 5 gleichzeitig aktiv sind.

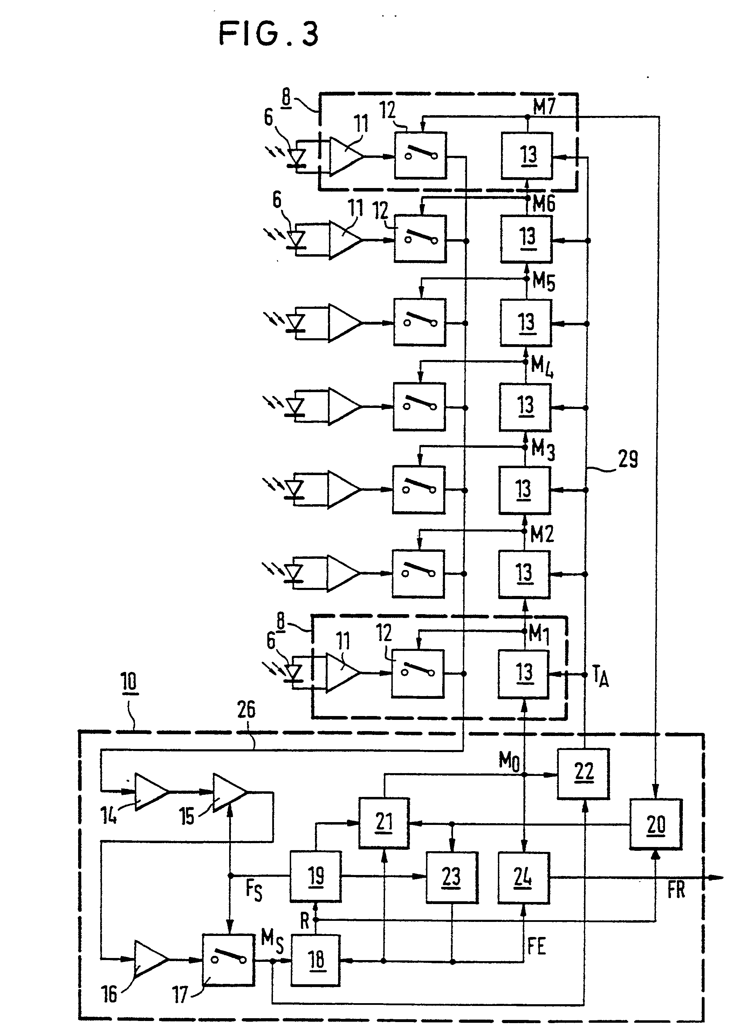

In Fig. 3 ist ein Ausführungsbeispiel einer Empfängerleiste 2 gezeigt.

Die sieben Empfängermodule 8, die jeweils einem der Lichtempfänger 6 nachgeschaltet sind, umfassen jeweils einen Vorverstärker 11, einen dem Vorverstärker 11 nachgeschalteten elektronischen Schalter 12 sowie eine Speicherzelle 13, deren Ausgang den elektronischen Schalter 12 beaufschlagt. Die Empfängersteuerung 10 der Empfängerleiste 2 umfaßt einen Verstärker 14, einen nachgeschalteten getakteten Differenzverstärker 15, einen Komparator 16, einen mit dessen Ausgang verbundenen Schalter 17, eine Initialisierungslogik 18, eine Steuerlogik 19, eine Austasterkennung 20, eine Normiereinheit 21, eine Taktansteuerung 22, eine Eingriffserkennung 23 sowie eine Freigabelogik 24.

Die von den Lichtempfängern 6 empfangene optische Strahlung wird in elektrische Signale umgewandelt, die in den Vorverstärkern 11 verstärkt werden. Die Ausgangssignale der Vorverstärker 11 sind den von den Speicherzellen 13 angesteuerten elektronischen Schaltern 12 zugeführt.

Diese elektronischen Schalter 12 bilden einen Multiplexer. Hierzu sind die Ausgänge dieser elektronischen Schalter 12 mit einer gemeinsamen Zeitmultiplexleitung 26 verbunden, über die das im Zeitmultiplex vorliegende Signal zum Verstärker 14 weitergeleitet wird, dessen Ausgangssignal dem Eingang des getakteten Differenzverstärkers 15 zugeführt ist. Der getaktete Differenzverstärker 15 weist ein Abtast-Halte-Glied auf. Die Ausgangsspannung eines solchen Abtast-Halte-Glieds folgt im eingeschalteten Zustand ebenso wie die eines Analogschalters der Eingangsspannung. Im ausgeschalteten Zustand wird jedoch der Spannungswert im Ausschaltaugenblick gespeichert.

Das Ausgangssignal des getakteten Differenzverstärkers 15 wird dem Komperator 16 zugeführt, um an den elektronischen Schalter 17 ein digitalisiertes bzw. binäres Signal abzugeben. Über den elektronischen Schalter 17 gelangt das binäre Signal zu der Taktansteuerung 22 sowie der Initialisierunglogik 18.

Die Steuerlogik 19 umfaßt einen Zeitgeber, welcher durch die Inititalisierungslogik 18 zurückgesetzt wird.

Die Steuerlogik 19 setzt das Zeitfenster für den jeweils folgenden, zu empfangenden Lichtimpuls, indem sie den getakteten Differenzverstärker 15 und den elektronischen Schalter 17 aktiviert.

Die Steuerlogik 19 triggert ferner die Eingriffserkennung 23 und die Normiereinheit 21, die das durch die Speicherzellen 13 gebildete Schieberegister bzw. Umlaufregister direkt und indirekt über die Taktansteuerung 22 in einen Ausgangszustand überführt, in dem sämtliche Speicherzellen 13 außer der ersten, unteren Speicherzelle 13 zurückgesetzt sind.

Die Normiereinheit 21 sowie die Eingriffserkennung 23 werden jeweils von der Austasterkennung 20 getriggert, die von der letzten, oberen Speicherzelle 13 des Schieberegisters gesetzt und von der Initialisierungslogik 18 wieder zurückgesetzt wird.

Die Eingriffserkennung 23 erfaßt einen Eingriff in den Lichtweg, sobald der Zeitgeber der Steuerlogik das betreffende Zeitfenster wieder schließt, ohne daß ein Lichtimpuls empfangen worden ist. Dies hat eine Verriegelung der Freigabelogik 24 zur Folge. Hierzu ist ein Ausgang der Eingriffserkennung 23 mit einem Eingang der Freigabelogik 24 verbunden. Der Geräteausgang wird in diesem Falle inaktiv. Eine anschließende Aktivierung des Geräteausgangs kann nur nach einer Triggerung der Normiereinheit 21 durch eine Austastung, d.h. durch die Austasterkennung 20 erfolgen. Eine solche Austastung wird erst dann erfaßt, wenn die letzte, obere Speicherzelle 13 gesetzt wird, also nach einem vollen Durchlauf ohne Eingriff in den zu überwachenden Bereich.

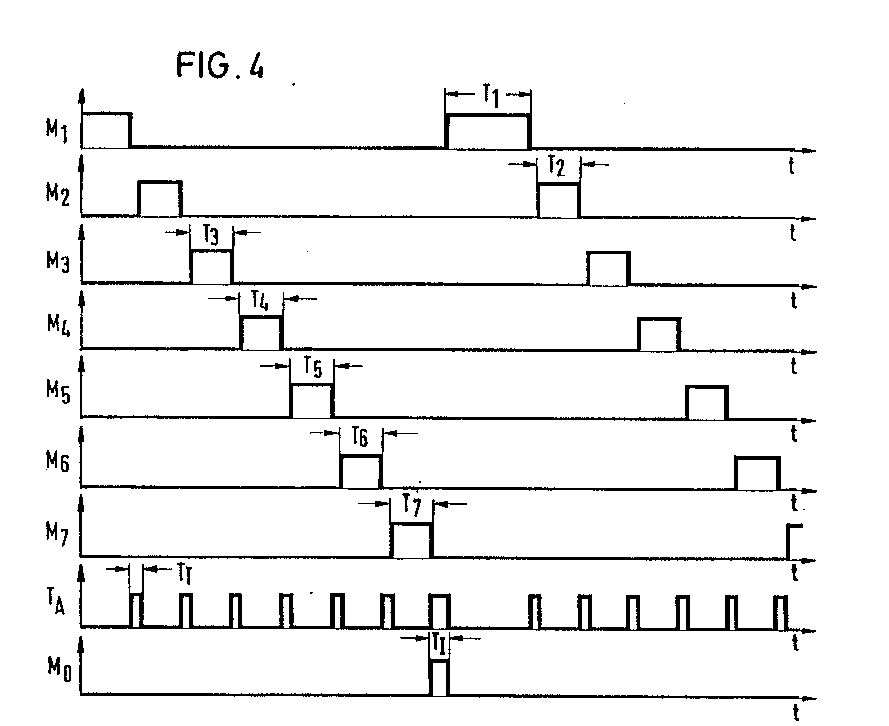

In Fig. 4 ist ein zeitlicher Verlauf der Aktivierung der Empfängermodule 8 einer mit sieben Modulen bestückten Empfängerleiste 2 gemäß Fig. 3 gezeigt.

Die an den Steuereingängen der elektronischen Schalter 12 anliegenden Spannungen $M_1$ bis $M_7$, die an der Taktleitung 29 anliegende Spannung $T_A$ sowie die am Eingang der ersten, unteren Speicherzelle 13 anliegende Spannung $M_0$ sind jeweils über der Zeitachse t aufgetragen. Die sieben elektronischen Schalter 12 werden jeweils während einer Dauer $T_1$ bis $T_7$ aktiviert. Die Schiebetaktimpulse besitzen jeweils eine Dauer bzw. Impulsbreite $T_T$ und ein Initialisierungsimpuls die Dauer $T_I$.

Die Initialisierung des durch die Speicherzellen 13 gebildeteten Schieberegisters erfolgt durch Rücksetzen aller Speicherzellen mittels eines Initialisierungsimpulses der Dauer $I_I$, der auf der Taktleitung 29 auftritt, sowie durch Setzen der ersten, unteren Speicherzelle 13 mittels eines Eingangsimpulses $M_0$. Da bei der Initialisierung lediglich die erste Speicherzelle 13 gesetzt wird, ist auch im Verlauf der weiteren Taktung stets nur eine der Speicherzellen 13 aktiv und demnach nur einer der elektronischen Schalter 12 leitend.

Mit der ansteigenden Flanke des Taktimpulses wird der jeweils aktive elektronische Schalter 12 deaktiviert. Mit der abfallenden Flanke dieses Taktimpulses erfolgt die Aktivierung des nächsten elektronischen Schalters.

Das Eingangssignal $M_0$ zur ersten Speicherzelle 13 tritt gleichzeitig mit dem Initialisierungsimpuls $T_I$ auf und besitzt die gleiche Impulsbreite. Diese Impulsbreite $T_I$ des Initialisierungsimpulses ist etwa doppelt so groß wie die Impulsbreite $T_T$ eines normalen Schiebetaktimpulses. Die Dauer $T_1$ der Aktivierung des ersten elektronischen Schalters 12 ist länger als die Dauer der Aktivierung der restlichen elektronischen Schalter, da hier die senderseitige Synchronisierpause beim Sprung von der Ansteuerung der letzten Lichtquelle 5 zur Ansteuerung der ersten Lichtquelle 5 berücksichtigt werden muß.

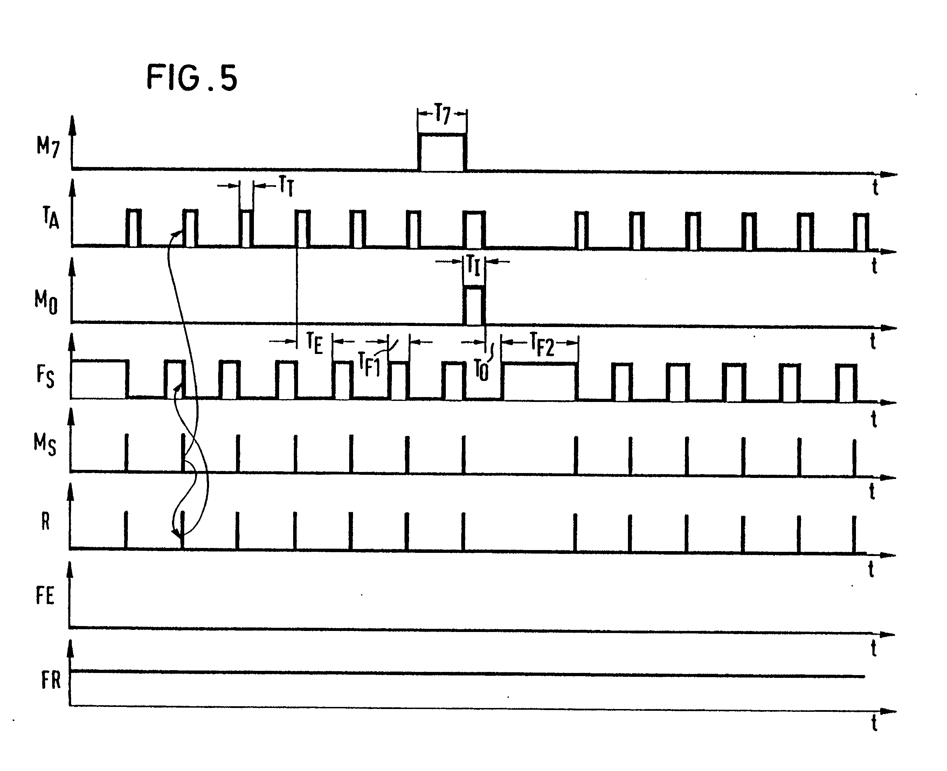

In Fig. 5 ist der zeitliche Verlauf der Steuersignale einer mit sieben Empfängermodulen 8 bestückten Empfangsleiste 2 gemäß Fig. 3 gezeigt, die sich im synchronisierten Zustand befindet, bei dem keine Unterbrechung der Sendelichtbündel auftritt.

Die einzelnen Steuersignale sind jeweils wiederum über der Zeitachse t aufgetragen.

$F_S$ gibt die Spannung am Steuereingang des getakteten Differenzverstärkers 15 an, $M_S$ die Ausgangsspannung des elektronischen Schalters 17, R die Spannung am Rücksetzeingang der Steuerlogik 19, FE die Ausgangsspannung der Eingriffserkennung 23 und FR die Ausgangsspannung der Freigabelogik 24. Die Steuerspannung $F_S$ definiert ein Zeitfenster, während dem ein jeweiliger Lichtimpuls erwartet wird. $T_E$ gibt die Zeitdauer zwischen einem Schiebetaktimpuls $T_T$ und dem Öffnen des Zeitfensters $F_S$ an, $T_0$ die Dauer zwischen der Initialisierung $T_I$ des Schieberegisters und dem Öffnen des Zeitfensters $F_S$, und $T_{F1}$ bzw. $T_{F2}$ jeweils die Dauer des Zeitfensters.

Dabei beträgt die Dauer des Zeitfensters nach einem Schiebetakt $T_{F1}$ und nach einer Initialisierung $T_{F2}$.

Die weiteren Bezeichnungen entsprechen denen der Fig. 4.

Im synchronierten Zustand, d.h. wenn der erste Empfängermodul 8 dann aktiviert und empfangsbereit ist, wenn die erste Lichtquelle 5 angesteuert wird, ist die Schiebetaktfrequenz der Empfängerleiste 2

$$f_{Empf} = \frac{1}{T_E + T_{F1}}$$

gleich groß wie die Taktfrequenz der Senderleiste 1

$$f_{Sende} = \frac{1}{T_S + T}$$

Ferner ist in diesem Falle auch die Summe aus der Dauer $T_S$ und der Synchronisierpause $T_P$, nämlich

$$T_S + T_P = 2(T_S + T)$$

gleich groß wie die auf den Empfänger bezogene Größe

$$I_I + T_0 + T_2.$$

Im synchronisierten Zustand wird ferner durch die Empfangssignale, d.h. die Ausgangsspannungen $M_S$ des Schalters 17, das Zeitfenster $F_1$ bzw. $F_2$ geschlossen und die Steuerlogik 19 zurückgesetzt. Das Öffnen des Zeitfensters erfolgt nach Ablauf der Zeit $T_E$ bzw. $T_0$, wenn der Verstärker eingeschwungen ist.

Wird demnach während des jeweiligen Zeitfensters ein Lichtimpuls empfangen und demnach eine Ausgangsspannung $M_S$ am Ausgang des Schalters 17 erzeugt, so führt dies zu einer Spannung R am Rücksetzeingang der Steuerlogik 19. Damit wird der Zeitgeber dieser Steuerlogik 19 zurückgesetzt, wodurch auch das zuvor geöffnete Zeitfenster geschlossen wird. Mit dem Auftreten der Spannung $M_S$ am Ausgang des Schalters 17 wird ferner über die Taktansteuerung 22 der nächste Taktimpuls ausgelöst. Mit der ansteigenden Flanke des betreffenden Taktimpulses wird auch der zugeordnete elektronische Schalter 12 (vgl. Fig. 3) deaktiviert.

Mit der darauffolgenden abfallenden Flanke des betreffenden Taktimpulses erfolgt eine Aktivierung des folgenden elektronischen Schalters 12 (vgl. Fig. 4). Das Öffnen des jeweiligen Zeitfensters, d.h. die Ansteuerung des Differenzverstärkers 15 sowie des Schalters 17, erfolgt jedoch demgegenüber etwas verzögert, d.h. nach Einschwingen des Verstärkers, bzw. nach einer entsprechenden Zeitvorgabe des Zeitgebers.

Da bei fehlendem Eingriff in den Lichtweg im synchronisierten Zustand der jeweilige Lichtimpuls jeweils rechtzeitig, d.h. jeweils innerhalb des betreffenden Zeitfensters, empfangen wird, erfolgt kein Setzen der Eingriffserkennung 23 und somit kein Sperren der Freifabelogik 24. Die Spannung FE am Ausgang der Eingriffserkennung 23 behält damit ihren Wert logisch Null, und die Spannung am Ausgang der Freigabelogik 24 den Wert logisch Eins 1 bei.

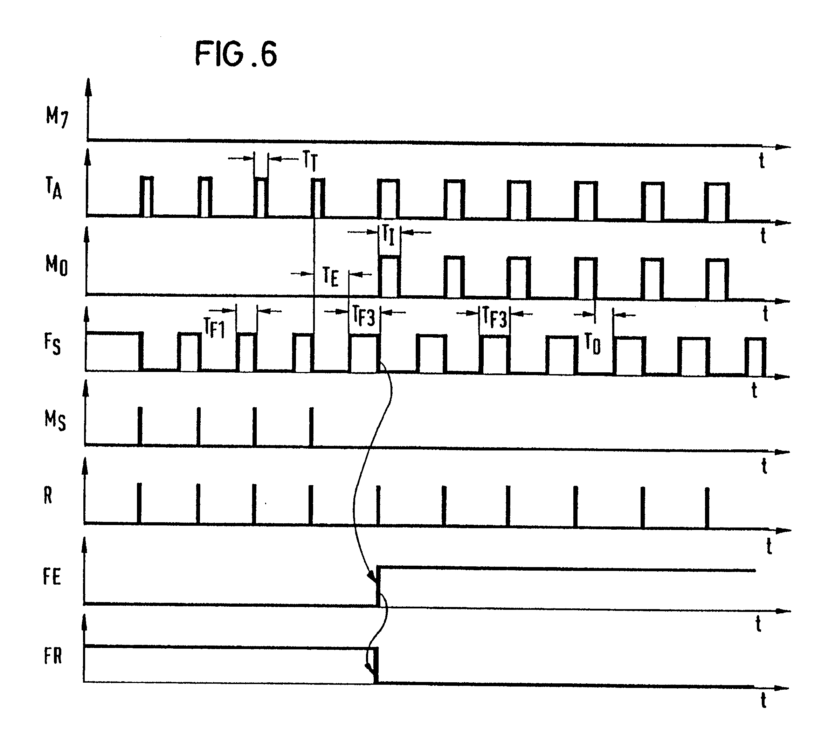

In Fig. 6 ist der zeitliche Verlauf derselben Steuerspannungen an den betreffenden Punkten der Schaltung gemäß Fig. 3 bei einem Eingriff in den Lichtweg gezeigt.

Dieser Eingriff erfolgt im synchronisierten Zustand in den fünften Lichtweg.

Nach einer Zeitdauer $T_{F3}$ wird das betreffende Zeitfenster, ohne daß ein Lichtimpuls empfangen wurde, wieder geschlossen, die Eingriffserkennung 23 gesetzt, die Freigabelogik 24 rückgesetzt und eine Initialisierung des Schieberegisters eingeleitet. Die Initialisierung erfolgt wiederum für die Dauer $T_I$. Nach gesetzter Eingriffserkennung 23 weist diese am Ausgang eine Spannung FE mit dem Wert logisch Eins auf. Demgegenüber geht die Spannung FR am Ausgang der Freigabelogik 24 auf den Wert logisch Null zurück.

Mit der abfallenden Flanke des Initialisierungsimpulses $T_I$ wird das erste Empfängermodul 8 aktiviert, d.h. der erste elektronische Schalter 12 geschlossen. Nach Ablauf der Zeitdauer $T_0$ wird das Zeitfenster wieder geöffnet.

Dieser Vorgang wiederholt sich, solange der erste Lichtempfänger 6 innerhalb des Zeitfensters $T_{F3}$ keinen Lichtimpuls empfängt. Die Eingriffserkennung 23 bleibt dabei gesetzt, während die Freigabelogik 24 verriegelt bleibt.

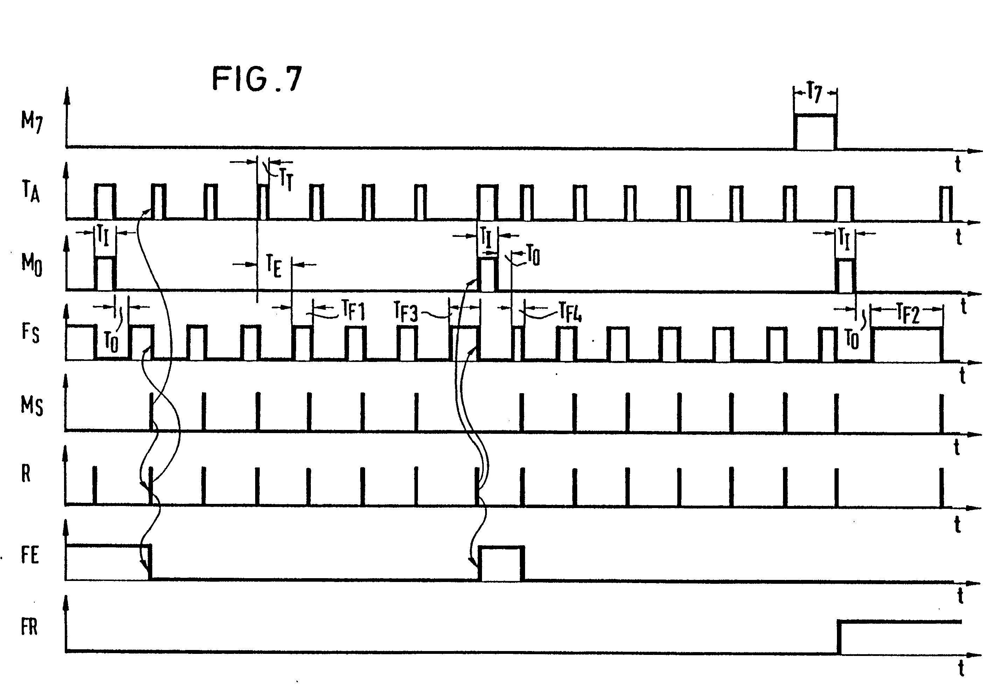

In Fig. 7 ist der zeitliche Verlauf dieser Steuerspannungen an den betreffenden Punkten der Schaltung gemäß Fig. 3 unmittelbar nach einer Freigabe des Lichtweges bzw. des zu überwachenden Bereichs gezeigt.

Die anschließende Synchronisation erfolgt in zwei Schritten, wenn mehrere Lichtquellen 5 in den ersten Lichtempfänger 6 einstrahlen können.

Im ersten Schritt rastet der Empfänger auf den Sender ein, sobald ein Lichtblitz bzw. -impuls auf den ersten Lichtempfänger 6 auftrifft, während das betreffende Zeitfenster geöffnet ist. Hierbei wird die Eingriffserkennung 23 zurückgesetzt, so daß deren Ausgang zunächst wieder die Spannung FE logisch Null annimmt. Dies hat jedoch noch keinen Einfluß auf die Ausgangsspannung FR der Freigabelodgik 24, d.h., daß diese Freigabelogik 24 zunächst noch gesperrt bleibt.

Beim in Fig. 7 gezeigten Beispiel stammt der erfaßte Lichtimpuls bzw-. Lichtblitz nicht von der ersten Lichtquelle 5, so daß die Lichtempfänger 6 versetzt zu den Lichtquellen 5 getaktet werden und gegenüber diesen nacheilen. Im dargestellten Fall trifft die Aktivierung einer der folgenden Empfängermodule 8 auf die Synchronisierpause $T_p$. Innerhalb des Zeitfensters F3 der Dauer $T_{F3}$ wird demnach kein Lichtimpuls empfangen.

Daraus folgt wiederum, daß die Eingriffserkennung 23 von neuem gesetzt und für die Zeitdauer $T_I$ eine Initialisierung des Schieberegisters vorgenommen wird.

Das Zeitfenster F4 der Dauer $T_{F4}$ wird nach Ablauf der Zeit $T_0$ rechtzeitig genug geöffnet, um den Lichtimpuls von der ersten Lichtquelle 5 zu empfangen und in einem zweiten Schritt die gewünschte Synchronität zu erreichen.

Die Freigabe der Freigabelogik 24 erfolgt schließlich nach einem vollständigen Zyklus.

Nachdem beim beschriebenen Lichtschrankengitter die Synchronisierung der Empfangsseite ummittelbar durch die Lichtimpulse erfolgt, können Verbindungsleitungen zwischen Sende- und Empfangsseite entfallen.

Beim Durchtakten der einzelnen Sender und Empfänger liegen zunächst vergleichsweise kleine Pausen zwischen den einzelnen Ansteuerungen bzw. Anregungen vor. Erst beim Springen vom letzten zum ersten Sender und entsprechend vom letzten zum ersten Empfänger tritt eine größere Pause auf, welche durch die senderseitige Synchronisierpause $T_p$ bestimmt wird. Damit erkennt die Empfängerseite, wenn auf der Senderseite der Sprung vom letzten Sender zum ersten Sender und dem Beginn eines Zyklus erfolgt. Dieser Unterschied in der Pause zwischen den Impulsen wird erfindungsgemäß für die Synchronisation zwischen Sender- und Empfangsseite ausgenutzt. Grundsätzlich ist es auch denkbar, eine derartige Synchronisation in Abhängigkeit von unterschiedlichen Impulslängen durchzuführen.

Beispielsweise beim Einschalten des Geräts ist damit zu rechnen, daß beim ersten Hoch- (bzw. Herunter-)laufen eine mangelnde Synchronisierung vorliegt, d.h. einander nicht zugeordnete Sender und Empfänger gleichzeitig aktiviert werden. Dies erfolgt jedoch nur während des ersten Hochlaufens. Bereits beim zweiten Durchlauf ist die gewünschte Synchronisation zwischen der Sende- und der Empfangsleiste gegeben.

Beim dargestellten Beispiel kann die Synchronisierpause $T_p$ auch als Pause zwischen zwei aufeinanderfolgenden Zyklen aufgefaßt werden.

Auch wenn die beiden Leisten vollständig durch ein Hindernis gegeneinander abgedeckt sind, beginnt anschließend nach dem Verschwinden des Hindernisses die Synchronisation in der gleichen Weise wie nach dem Einschalten der Anordnung.

Entscheidend ist auch, daß bei jedem Außer-Takt-Kommen zwischen Sender und Empfänger ein Fehlersignal ausgelöst wird, da dieses Außer-Takt-Kommen nur auf das Vorliegen eines Hindernisses, d.h. auf die Unterbrechung eines, mehrerer oder aller Lichtwege zurückgeführt werden kann.

Bezugszeichenliste

1 Senderleiste
2 Empfängerleiste
3 Filterscheiben
4 Linsen
5 Lichtquellen
6 Lichtempfänger
7 Sendermodul
8 Empfängermodul
9 Lichtquellensteuerung
10 Empfängersteuerung
11 Vorverstärker
12 elektronischer Schalter
13 Speicherzelle
14 Verstärker
15 Differenzverstärker
16 Komparator
17 elektronischer Schalter
18 Initialisierungslogik
19 Steuerlogik
20 Austasterkennung
21 Normiereinheit
22 Taktansteuerung
23 Eingriffserkennung
24 Freigabelogik
26 Zeitmultiplexleitung
28 Taktleitung
29 Taktleitung

Sonderpositionen

| $T_S$ | Dauer eines Sendeimpulses |
|---|---|
| $T$ | Dauer zwischen zwei Sendeimpulsen |
| $T_p$ | Dauer zwischen letzter und erster Lichtquelle zugeordnetem Sendeimpuls |
| $M_1 - M_7$ | Spannungen an Steuereingängen der Schalter 12 |
| $T_A$ | Spannung an Taktleitung |
| $M_0$ | Spannung am Eingang der ersten Speicherzelle 13 |
| $T_1 - T_7$ | Dauer der Aktivierung der Schalter 12 |
| $T_T$ | Dauer des Schiebetaktimpulses |
| $T_I$ | Dauer des Initialisierungsimpulses |
| $F_S$ | Spannung am Steuereingang des getakteten Differenzverstärkers 15 |
| $M_S$ | Ausgangsspannung des Schalters 17 |
| $R$ | Spannung am Rücksetzeingang der Steuerlogik 19 |
| FE | Ausgangsspannung der Eingriffserkennung 23 |
| FR | Ausgangsspannung der Freigabelogik 24 |

$T_E$     Zeitdauer zwischen Schiebetaktimpuls $T_T$ und Öffnen des Zeitfensters FS
$T_0$     Dauer zwischen Initialisierung des Schieberegisters
$T_I$     und Öffnen des Zeitfensters
$T_{F1}$     Dauer des Zeitfensters nach einem Schiebetakt
$T_{F2}$     Dauer des Zeitfensters nach einer Initialisierung
$TF_3$     Dauer des Zeitfensters bei fehlendem Lichtimpuls

## Patentansprüche

1. Lichcschrankengitter mit mehreren nebeneinander angeordneten Lichtquellen (5) und jeweils einer Lichtquelle zugeordneten Lichtempfängern (6), einer Lichtquellensteuerung (9) sowie einer Empfängersteuerung (10), wobei die Lichtquellen und Lichtempfänger zur Abgabe bzw. zum Empfang von Lichtimpulsen jeweils einzeln und zeitlich nacheinander ansteuerbar sind, die Lichtquellensteuerung (9) und die von dieser elektrisch entkoppelte Empfängersteuerung (10) synchron betreibbar sind, wenigstens einer der Lichtempfänger (6) in Abhängigkeit vom Empfang eines vorangehenden Lichtimpulses ansteuerbar ist und die Empfängersteuerung (10) nach Ausbleiben eines erwarteten Lichtimpulses bzw. nach der Ansteuerung eines letzten Lichtempfängers auf einen ersten Lichtempfänger zurücksetzbar ist, dadurch **gekennzeichnet**, daß jeder dieser Lichtempfänger (6) jeweils in Abhängigkeit vom Zeitpunkt des Auftretens des zuvor empfangenen Lichtimpulses ansteuerbar ist, daß jeweils zwischen der Ansteuerung einer letzten und einer ersten Lichtquelle eine Synchronisierpause ($T_p$) vorgebbar ist und daß die Empfängersteuerung (10) in Abhängigkeit vom Auftreten der Synchronisierpause ($T_p$) auf den ersten Lichtempfänger zurücksetzbar ist.

2. Lichtschrankengitter nach Anspruch 1, dadurch **gekennzeichnet**, daß die Empfängersteuerung (10) Mittel (19, 23, 24) zur Erfassung und Meldung des Ausbleibens eines während einer jeweiligen Empfängeransteuerung erwarteten Lichtimpulses umfaßt und die Empfängersteuerung (10) bei Ausbleiben des erwarteten Lichtimpulses in einen Ausgangszustand rücksetzbar ist, in dem ein definierter erster Lichtempfänger (6) angesteuert ist.

3. Lichtschrankengitter nach einem der vorhergehenden Ansprüche, dadurch **gekennzeichnet**, daß die durch die Lichtquellensteuerung (9) vorgebbare Synchronisierpause ($T_p$) zwischen der Ansteuerung einer letzten und einer ersten Lichtquelle (5) größer als ein zumindest dem zweiten bis letzten Lichtempfänger (6) während einer Ansteuerung jeweils zugeordnetes Zeitfenster ($T_{F3}$) ist, während dem ein Lichtimpuls erwartet wird.

4. Lichtschrankengitter nach Anspruch 3, dadurch **gekennzeichnet**, daß die Empfängersteuerung (10) eine Austasterkennung (20) zur Erfassung eines vollständigen Durchlaufs vom ersten bis zum letzten Lichtempfänger (6) umfaßt und daß das dem anschließend ansteuerbaren ersten Lichtempfänger (6) zugeordnete Zeitfenster ($T_{F2}$) in Abhängigkeit von der Dauer der Synchronisierpause ($T_p$) größer gewählt ist.

5. Lichtschrankengitter nach einem der vorhergehenden Ansprüche, dadurch **gekennzeichnet**, daß die Mittel (19, 23, 24) zur Erfassung und Meldung des Ausbleibens eines erwarteten Lichtimpulses eine mit der Erfassung des Ausbleibens des betreffenden Lichtimpulses verriegelbare Freigabelogik (24) umfassen.

6. Lichtschrankengitter nach Anspruch 5, dadurch **gekennzeichnet**, daß die Freigabelogik (24) in Abhängigkeit von der Erfassung eines vollständigen Durchlaufs vom ersten bis zum letzten Lichtempfänger (6) rücksetzbar ist.

7. Lichtschrankengitter nach einem der vorhergehenden Ansprüche, dadurch **gekennzeichnet**, daß den Lichtquellen (5) Sendermodule (7) zugeordnet und die Sendermodule zu einem von der Lichtquellensteuerung (9) ansteuerbaren Schieberegister verschaltet sind.

8. Lichtschrankengitter nach einem der vorhergehenden Ansprüche, dadurch **gekennzeichnet**, daß den Lichtempfängern (6) Empfängermodule (8) zugeordnet und die Empfängermodule zu einem von der Empfängersteuerung (10) ansteuerbaren Schieberegister verschaltet sind.

9. Lichtschrankengitter nach einem der vorhergehenden Ansprüche, dadurch **gekennzeichnet**, daß jeder Empfängermodul (8) zur Bildung des Schieberegisters eine Speicherzelle (13) sowie einen von dieser beaufschlagbaren elektronischen Schalter (12) umfaßt, der zwischen dem zugeordneten Lichtempfänger (6) und einer zur Empfängersteuerung (10) führenden gemeinsamen Zeitmultiplexleitung (26) angeordnet ist.

10. Lichtschrankengitter nach einem der vorhergehenden Ansprüche, dadurch **gekennzeichnet**, daß die Empfängersteuerung (10) eingangsseitig einen getakteten Differenzverstärker (15) mit einem Abtast-Halte-Glied sowie vorzugsweise einen diesem nachgeordneten elektronischen Schalter (17) umfaßt, die während eines jeweiligen Zeitfenscers ($T_F$) über eine einen Zeitgeber aufweisende Steuerlogik (19) ansteuerbar sind.

11. Lichtschrankengitter nach einem der vorhergehenden Ansprüche, dadurch **gekennzeichnet**, daß das Ausgangssignal (MS) des Differenzverstärkers (15) bzw. des Schalters (17) einer die Speicherzellen (13) beaufschlagenden Taktansteuerung (22) sowie einer Initialisierungslogik (18) zugeführt ist, deren Ausgang mit

EP 0 397 757 B1

einem Rücksetzeingang der Steuerlogik (19) verbunden ist, um deren Zeitgeber zurückzusetzen.

12. Lichtschrankengitter nach einem der vorhergehenden Ansprüche, dadurch **gekennzeichnet,** daß die Empfängersteuerung (10) eine von der Steuerlogik (19) und der Austasterkennung (20) triggerbare, die erste Speicherzelle (13) sowie die Taktansteuerung (22) beaufschlagende Normiereinheit (21) umfaßt, um das Schieberegister bei Ausbleiben eines erwarteten Lichtimpulses bzw. nach Erfassung eines vollständigen Durchlaufs bis zur letzten Speicherzelle (13) in den Ausgangszustand zurückzusetzen, in dem lediglich die erste Speicherzelle (13) gesetzt ist.

13. Lichtschrankengitter nach einem der vorhergehenden Ansprüche, dadurch **gekennzeichnet,** daß die Austasterkennung (20) durch die letzte Speicherzelle (13) setzbar und durch die Initialisierungslogik (18) rücksetzbar ist.

14. Lichtschrankengitter nach einem der vorhergehenden Ansprüche, dadurch **gekennzeichnet,** daß die Mittel (19, 23, 24) zur Erkennung und Meldung des Ausbleibens eines erwarteten Lichtimpulses außer der Steuerlogik (19) sowie der Freigabelogik (24) ferner eine von der Steuerlogik (19) und vorzugsweise der Austasterkennung triggerbare Eingriffserkennung (23) umfaßt, die ein Ausgangssignal liefert, sobald ein betreffendes Zeitfenster geschlossen wird, ohne daß ein Lichtimpuls empfangen worden ist.

15. Lichtschrankengitter nach Anspruch 14, dadurch **gekennzeichnet,** daß das Ausgangssignal der Eingriffserkennung (23) der Freigabelogik (24) zugeführt ist, um diese zu verriegeln.

16. Lichtschrankengitter nach einem der vorhergehenden Ansprüche, dadurch **gekennzeichnet,** daß das Ausgangssignal der Eingriffserkennung (23) zur Zurücksetzung des Zeitgebers der Steuerlogik (19) und zur Zurücksetzung des Schieberegisters in den Ausgangszustand der Initialisierungslogik (18) sowie der Normiereinheit (21) zugeführt ist.

17. Lichtschrankengitter nach einem der vorhergehenden Ansprüche, dadurch **gekennzeichnet,** daß die Freigabelogik (24) vom Ausgang der Normiereinheit (21) beaufschlagbar ist, um nach einer Triggerung der Normiereinheit durch die Austasterkennung (20) entriegelt zu werden.

18. Lichtschrankengitter nach einem der vorhergehenden Ansprüche, dadurch **gekennzeichnet,** daß Lichtquellen (5) und Lichtempfänger (6) auf gegenüberliegenden Seiten des zu überwachenden Bereichs angeordnet sind.

19. Lichtschrankengitter nach einem der vorhergehenden Ansprüche, dadurch **gekennzeichent,** daß die Lichtquellen (5) durch als Matrix verschaltete lichtemittierende Dioden gebildet sind.

20. Lichtschrankengitter nach einem der vorhergehenden Ansprüche, dadurch **gekennzeichnet,** daß Mittel zur Erkennung der Anzahl der jeweils vorgesehenen Lichtquellen (5) und/oder Lichtempfänger (6) sowie vorzugsweise zur selbstätigen Anpassung der jeweiligen Steuerung an die gegebene Anzahl der Elemente vorgesehen sind.

21. Verwendung des Lichtschrankengitters nach einem der vorhergehenden Ansprüche als Durchgangsüberwachung insbesondere zur Türsteuerung in Fahrstühlen.


**Claims**

1. Light barrier grid comprising several light sources (5) arranged alongside one another and light receivers (6) each associated with one light source; a light source control (9) and also a receiver control (10), wherein the light sources and the light receivers are respectively individually activatable one after the other in time sequence to transmit and receive light pulses respectively, wherein the light source control (9) and the receiver control (10) which is electrically decoupled from the latter are operatable in synchronism, wherein at least one of the light receivers (6) can be activated in dependence on the receipt of a preceding light pulse and wherein the receiver control (10) can be reset to a first light receiver following the absence of an expected light pulse or after the activation of a last light receiver, characterised in that each of these light receivers (6) is respectively activated in dependence on the time of occurrence of the previously received light pulse; in that a synchronisation pause ($T_p$) between the activation of a last light source and of a first light source can be preset; and in that the receiver control (10) can be reset to the first light receiver in dependence on the occurrence of the synchronisation pause ($T_p$).

2. Light barrier grid in accordance with claim 1, characterised in that the receiver control (10) includes means (19, 23, 24) for the detection and indication of the absence of a light pulse expected during activation of the respective receiver; and in that the receiver control (10) is resettable in the absence of the expected light pulse into an initial state in which a defined first light receiver (6) is activated.

3. Light barrier grid in accordance with one of the preceding claims, characterised in that the synchronisation pause ($T_p$) which is set by the light source control (9) between the activation of a last light source and of a first light source (5) is larger than a time window ($T_{F3}$) during which a light pulse is expected, the time window being associated with at least one of the second to the last light receivers (6) during activation thereof.

4. Light barrier grid in accordance with claim 3, characterised in that the receiver control (10) has a blanking recognition circuit (20) for detecting a complete cycle from the first to the last light receiver (6); and in that the time window ($T_{F2}$) associated with the subsequently activatable first light receiver (6) is made larger in dependence on the duration of the synchronisation pause ($T_p$).

5. Light barrier grid in accordance with one of the preceding claims, characterised in that the means (19, 23, 24) for detecting and indicating the absence of an expected light pulse include a release logic circuit (24) which can be locked with the detection of the absence of the relevant light pulse.

6. Light barrier grid in accordance with claim 5, characterised in that the release logic circuit (24) is resettable in dependence on the detection of a complete cycle from the first to the last light receiver (6).

7. Light barrier grid in accordance with one of the preceding claims, characterised in that transmitter modules (7) are associated with the light sources (5); and in that the transmitter modules are connected into a shift register which can be controlled from the light source control (9).

8. Light barrier grid in accordance with one of the preceding claims, characterised in that receiver modules (8) are associated with the light receivers (6); and in that the receiver modules are connected into a shift register controllable by the receiver control (10).

9. Light barrier grid in accordance with one of the preceding claims, characterised in that each receiver module (8) includes a storage cell (13) for the formation of a shift register and also an electronic switch (12) which is energisable by the latter, with the switch (12) being arranged between the associated light receiver (6) and a common time multiplex line (26) which leads to the receiver control (10).

10. Light barrier grid in accordance with one of the preceding claims, characterised in that the receiver control (10) includes at the input side a pulsed differential amplifier (15) with a sample and hold circuit and also preferably an electronic switch (17) connected to the latter which can be controllable during a respective time window ($T_F$) via a logic control circuit (19) having a time generator.

11. Light barrier grid in accordance with one of the preceding claims, chraracterised in that the output signal (MS) of the differential amplifier (15) or of the switch (17) is supplied to a timing control circuit (22) which acts on the memory cells (13) and also to an initialisation logic circuit (18), the output of which is connected with a resetting input of the control logic circuit (19) in order to reset its time generator.

12. Light barrier grid in accordance with one of the preceding claims, characterised in that the receiver control (10) includes a presetting logic circuit (21) triggerable by the logic control circuit (19) and the blanking recognition circuit (20), with the presetting logic circuit energising the first storage cell (13) and also the clock control (22) in order to reset the shift register into the initial state in the absence of an expected light pulse, or on the detection of a full cycle up to the last storage cell (13), with only the first storage cell (13) being set in the initial state.

13. Light barrier grid in accordance with one of the preceding claims, characterised in that the blanking recognition circuit (20) is settable by the last storage cell (13) and is resettable by the initialising logic circuit (18).

14. Light barrier grid in accordance with one of the preceding claims, characterised in that the means (19, 23, 24) for the recognition and indication of the absence of an expected light pulse includes, apart from the logic control circuit (19) and also the release logic circuit (24), in addition an intervention recognition circuit (23) which is triggerable by the logic control circuit (19) and preferably by the blanking recognition circuit, with the intervention recognition circuit delivering an output signal as soon as a relevant time window is closed without a light pulse having been received.

15. Light barrier grid in accordance with claim 14, characterised in that the output signal of the intervention recognition circuit (23) is supplied to the logic release circuit (24) in order to latch the latter.

16. Light barrier grid in accordance with one of the preceding claims, characterised in that the output signal of the intervention recognition circuit (23) is supplied to the initialising logic circuit (18) and also to the presetting logic circuit (21) for the resetting of the time generator of the control logic (19) and of the shift register into the initial state.

17. Light barrier grid in accordance with one of the preceding claims, characterised in that the release logic circuit (24) is energisable by the output of the presetting locig circuit (21) in order to be delatched after triggering of the presetting logic circuit by the blanking recognition circuit (20).

18. Light barrier grid in accordance with one of the preceding claims, characterised in that the light sources (5) and the light receivers (6) are arranged on opposite sides of the region to be monitored.

19. Light barrier grid in accordance with one of the preceding claims, characterised in that the light sources (5) are formed as light emitting diodes connected into a matrix.

20. Light barrier grid in accordance with one of the preceding claims, characterised in that means are provided for recognising the number of the respectively provided light sources (5) and/or light receivers (6) and also preferably for automatic adaptation of the respective control to the given number of elements.

21. Light barrier in accordance with one of the preceding claims, characterised by its use to monitor throughways, in particular for door control in lifts.

**Revendications**

1. Réseau de barrages photoélectriques comprenant plusieurs sources lumineuses (5) agencées les unes à côté des autres et des récepteurs de lumière (6) associés chacun à une source lumineuse; une commande des sources lumineuses (9) ainsi qu'une commande des récepteurs (10), les sources lumineuses et les récepteurs de lumière étant respectivement individuellement activables les uns après les autres en séquence dans le temps pour respectivement émettre et recevoir des pulsations lumineuses, la commande des sources lumineuses (9) et la commande des récepteurs (10) qui est électriquement découplée de cette dernière pouvant être actionnées en synchronisme; au moins un des récepteurs de lumière (6) pouvant être activé en fonction de la réception d'une impulsion lumineuse précédente, et la commande des récepteurs (10) pouvant être ramenée sur un premier récepteur de lumière à la suite de l'absence d'une impulsion de lumière attendue ou après l'activation d'un dernier récepteur de lumière, caractérisé en ce que chacun de ces récepteurs de lumière (6) est respectivement activé en fonction du moment où se produit l'impulsion lumineuse précédemment reçue; en ce qu'une pause de synchronisation $(T_p)$ entre l'activation d'une dernière source lumineuse et d'une première source lumineuse peut être préétablie; et en ce que la commande des récepteurs (10) peut être ramenée sur le premier récepteur de lumière en fonction de la survenance de la pause de synchronisation $(T_p)$.

2. Réseau de barrages photoélectriques selon la revendication 1, caractérisé en ce que la commande des récepteurs (10) comprend des moyens (19, 23, 24) pour la détection et l'indication de l'absence d'une impulsion lumineuse attendue pendant l'activation du récepteur respectif; et en ce que la commande des récepteurs (10) peut être ramenée en l'absence de l'impulsion lumineuse attendue dans un état initial dans lequel un premier récepteur de lumière défini (6) est activé.

3. Réseau de barrages photoélectriques selon l'une des revendications précédentes, caractérisé en ce que la pause de synchronisation $(T_p)$ établie par la commande des sources lumineuses (9) entre l'activation d'une dernière source lumineuse et une première source lumineuse (5), est plus longue qu'une fenêtre temporelle $(T_{F3})$ pendant laquelle une impulsion lumineuse est attendue, la fenêtre temporelle étant associée à au moins chacun des récepteurs lumineux du second au dernier (6) pendant l'activation de ceux-ci.

4. Réseau de barrages photoélectriques selon la revendication 3, caractérisé en ce que la commande des récepteurs (10) comprend un circuit de suppression (20) pour détecter un cycle complet depuis le premier jusqu'au dernier récepteur de lumière (6); et en ce que la fenêtre temporelle $(T_{F2})$ associée au premier récepteur de lumière (6) qui doit être ensuite activé est rendue plus large en fonction de la durée de la pause de synchronisation $(T_p)$.

5. Réseau de barrages photoélectriques selon l'une des revendications précédentes, caractérisé en ce que les moyens (19, 23, 24) pour détecter et indiquer l'absence d'une impulsion lumineuse attendue comprennent un circuit logique de déblocage (24) qui peut être verrouillé par la détection de l'absence de l'impulsion lumineuse en question.

6. Réseau de barrages photoélectriques selon la revendication 5, caractérisé en ce que le circuit logique de déblocage (24) peut être remis à zéro en fonction de la détection d'un cycle complet depuis le premier jusqu'au dernier récepteur de lumière (6).

7. Réseau de barrages photoélectriques selon l'une des revendications précédentes, caractérisé en ce que des modules de transmission (7) sont associés aux sources lumineuses (5); et en ce que les modules de transmission sont raccordés en un registre à décalage qui peut être commandé par la commande des sources lumineuses (9).

8. Réseau de barrages photoélectriques selon l'une des revendications précédentes, caractérisé en ce que des modules de réception (8) sont associés aux récepteurs de lumière (6); et en ce que les modules de réception sont raccordés en un registre à décalage qui peut être commandé par la commande des récepteurs (10).

9. Réseau de barrages photoélectriques selon l'une des revendications précédentes, caractérisé en ce que chaque module récepteur (8) comprend une cellule de stockage (13) pour la formation d'un registre à décalage, ainsi qu'un commutateur électronique (12) qui peut être excité par ce dernier, le commutateur (12) étant agencé entre le récepteur de lumière associé (6) et une ligne de multiplexage temporelle commune (26) qui aboutit à la commande des récepteurs (10).

10. Réseau de barrages photoélectriques selon l'une des revendications précédentes, caractérisé en ce que la commande des récepteurs (10) comprend du côté entrée un amplificateur différentiel pulsé (15) avec un circuit d'échantillonnage et de maintien, et de préférence un commutateur électronique (17) raccordé à ce dernier, qui peut être commandé pendant une fenêtre temporelle ($T_F$) respective via un circuit de commande logique (19) incluant une horloge.

11. Réseau de barrages photoélectriques selon l'une des revendications précédentes, caractérisé en ce que le signal de sortie (MS) de l'amplificateur différentiel (15) ou du commutateur (17) est fourni à un circuit de commande temporel (22) qui agit sur les cellules de mémoire (13) et à un circuit logique d'initialisation (18) dont la sortie est raccordée à une entrée de remise à zéro du circuit logique de commande (19) afin de remettre son horloge à zéro.

12. Réseau de barrages photoélectriques selon l'une des revendications précédentes, caractérisé en ce que la commande des récepteurs (10) comprend un circuit logique de préréglage (21) qui peut être déclenché par le circuit de commande logique (19) et le circuit de reconnaissance de suppression (20), le circuit logique de préréglage excitant la première cellule de stockage (13) ainsi que la commande d'horloge afin de ramener le registre à décalage dans l'état initial en l'absence d'une impulsion lumineuse attendue, ou en cas de détection d'un cycle complet jusqu'à la dernière cellule de stockage (13), seule la première cellule de stockage (13) étant remise à l'état initial.

13. Réseau de barrages photoélectriques selon l'une des revendications précédentes, caractérisé en ce que le circuit de reconnaissance de suppression (20) peut être enclenché par la dernière cellule de stockage (13) et remis à zéro par le circuit logique d'initialisation (18).

14. Réseau de barrages photoélectriques selon l'une des revendications précédentes, caractérisé en ce que les moyens (19, 23, 24) destinés à reconnaître et à indiquer l'absence d'une impulsion lumineuse attendue comprennent, en plus du circuit de commande logique (19) et du circuit logique de déblocage (24), un circuit de reconnaissance de pénétration (23) qui est déclenchable par le circuit de commande logique (19) et de préférence par le circuit de reconnaissance de suppression, le circuit de reconnaissance de pénétration fournissant un signal de sortie dès qu'une fenêtre temporelle concernée est fermée sans qu'une impulsion lumineuse ait été reçue.

15. Réseau de barrages photoélectriques selon la revendication 14, caractérisé en ce que le signal de sortie du circuit de reconnaissance de pénétration (23) est fourni au circuit de déblocage logique (24) afin de verrouiller ce dernier.

16. Réseau de barrages photoélectriques selon l'une des revendications précédentes, caractérisé en ce que le signal de sortie du circuit de reconnaissance de pénétration (23) est fourni au circuit logique d'initialisation (18) ainsi qu'au circuit logique de préréglage (21) pour remettre à zéro l'horloge du circuit logique de commande (19) et pour ramener à l'état initial le registre à décalage.

17. Réseau de barrages photoélectriques selon l'une des revendications précédentes, caractérisé en ce que le circuit logique de déblocage (24) peut être excité par la sortie du circuit logique de préréglage (21) afin d'être déverrouillé après que le circuit logique de préréglage ait été déclenché par le circuit de reconnaissance de suppression (20).

18. Réseau de barrages photoélectriques selon l'une des revendications précédentes, caractérisé en ce que les sources lumineuses (5) et les récepteurs de lumière (6) sont agencés sur les côtés opposés de la région à surveiller.

19. Réseau de barrages photoélectriques selon l'une des revendications précédentes, caractérisé en ce que les sources lumineuses (5) sont constituées par des diodes luminescentes raccordées suivant une matrice.

20. Réseau de barrages photoélectriques selon l'une des revendications précédentes, caractérisé en ce que des moyens sont prévus pour reconnaître le nombre de sources lumineuses (5) et/ou de récepteurs de lumière (6) respectivement prévus, et également de préférence pour adapter automatiquement la commande respective au nombre actuel d'éléments.

21. Réseau de barrages photoélectriques selon l'une des revendications précédentes, caractérisé en ce qu'il est utilisé pour la surveillance de passages, en particulier pour la commande des portes dans des ascenseurs.

# FIG.1

FIG.2

$I_{S1}$

$I_{S2}$

$I_{S3}$

$I_{S4}$

$I_{S5}$

$I_{S6}$

$I_{S7}$

EP 0 397 757 B1

# FIG.3

FIG. 4

# FIG.5

EP 0 397 757 B1

FIG.6

EP 0 397 757 B1

# FIG.7

EP 0 397 757 B1